# EUROPÄISCHE PATENTSCHRIFT

(11) **EP 0 389 651 B1**
(45) Veröffentlichungstag und Bekanntmachung des Hinweises auf die Patenterteilung: **10.08.1994**
(21) Anmeldenummer: 89105408.2
(22) Anmeldetag: 28.03.1989
(51) Int. Cl.: H01R 4/64

(54) **Schutzleiteranschluss zum Anschliessen an eine Tragschiene**
Ground wire contact for connection to a bearing rail
Borne pour conducteur de protection pour connexion à un rail de support

(43) Veröffentlichungstag der Anmeldung: 03.10.1990
(73) Patentinhaber: Weidmüller Interface GmbH & Co., D-32760 Detmold (DE)
(72) Erfinder: Hanning, Walter, D-4901 Hiddenhausen (DE); Steinkuhle, Ferdinand, D-4790 Paderborn-Wewer (DE); Pampel, Jürgen, D-4902 Bad Salzuflen (DE); Wilmes, Manfred, D-4930 Detmold (DE)
(74) Vertreter: Stracke, Alexander, Dipl.-Ing.

(56) Entgegenhaltungen:
- DE-A- 3 339 365
- FR-A- 2 296 281

## Beschreibung

Die Erfindung betrifft einen Schutzleiteranschluß zum Anschließen an mindestens einen etwa horizontal nach außen abstehenden Schenkel aufweisenden Tragschienen, für insbesondere mehretagige elektrische Klemmen, mit einer Klemmschraube und einem Klemmkörper, der einen den Tragschienenschenkel untergreifenden sowie einen den Tragschienenschenkel hintergreifenden Bügel aufweist. Derartige Schutzleiteranschlüsse sind in ihrem grundsätzlichen Aufbau beispielsweise aus der DE-C-28 45 532 bekannt. Es läßt sich mit ihnen eine zuverlässige, vom Durchmesser des anzuschließenden Leiters unabhängige Klemmkraft erzeugen. Verwendet man sie im Zusammenhang mit Tragschienen, deren nach außen abgewinkelter Schenkel einen gewissen Schrägverlauf hat, kommt es beim Anziehen der Klemmschraube auch zu einer kleinen schräggerichteten Klemmbewegung des den Tragschienenschenkel untergreifenden Bügels. Versieht man seine Klemmzoneemit einer kleinen Verzahnung, wird eine etwaige Korrosionsschutzschicht auf dem Tragschienenschenkel angeritzt, so daß es zu einer einwandfreien und zuverlässigen elektrischen Kontaktierung kommt. Die sichere Funktion des bekannten Schutzleiteranschlusses setzt voraus, daß der Schutzleiteranschluß im Isolierstoffgehäuse einer zugeordneten elektrischen Klemme noch so untergebracht werden kann, daß die Klemmschraube des Schutzleiteranschlusses im wesentlichen noch im Erstreckungsbereich des Tragschienenschenkels, oberhalb dieses Schenkels, liegen kann. Während dies in den meisten Anwendungsfällen bei normalen, einetagigen elektrischen Reihenklemmen gegeben ist, ist dies im Regelfall bei mehretagigen elektrischen Klemmen nicht mehr der Fall, da hier aufgrund des grundsätzlichen Aufbaus derartiger mehretagiger Klemmen im unteren Bereich das Isolierstoffgehäuse so weit nach außen über die Tragschienenschenkel hinausragen muß, daß der hier im unteren Außenbereich des Isolierstoffgehäuses unterzubringende Schutzleiteranschluß nach außen mit deutlichem Abstand zu dem entsprechenden Schenkel der Tragschiene zu liegen kommt. Von daher ist es bekannt geworden (DE-C-31 26 535), einen einseitig über dem Innenraum der Tragschiene eingespannten Verlängerungs- und Verbindungshebel vorzusehen, der im Bereich oberhalb des Tragschienenschenkels eine Kontaktanformung hat und der bis zu der nach außen abständig vom Tragschienenschenkel liegenden Klemmschraube geführt ist, die auf ihn einwirkt und ihn beim Anziehen gegen den eingelegten Leiter drückt. Hiermit ist zwar der Abstand zwischen der außen liegenden Klemmschraube und dem Tragschienenschenkel überbrückt, doch ist in nachteiliger Weise die Größe der Kontaktkraft abhängig vom Querschnitt des anzuschließenden Leiters. Leiter mit großem Durchmesser bringen nur eine geringe Verlagerung des Hebels und damit eine entsprechend geringe Kontaktkraft. Insgesamt führt auch die in ihrer Spitze nur gerundete Kontaktanformung im Hebel zu einer schlechten Kontaktierung insbesondere dann, wenn die Tragschiene wie üblich mit Korrosionsschutzschichten versehen ist.

Um bei Überbrückung des Abstandes zwischen einer nach außen versetzt liegenden Klemmschraube und dem Tragschienenschenkel eine vom Leiterquerschnitt unabhängige zuverlässige Kontaktkraft zu haben, ist es ferner bekannt geworden (DE-C-33 39 365), diesen Abstand mittels einer etwa mittig zwischen der Klemmschraube und dem Tragschienenschenkel gelagerten zweiarmigen Wippe zu überbrücken. Auf den einen Arm der Wippe wirkt die Klemmschraube beim Anschließen des Leiters. Der andere Arm der Wippe wirkt mit einer verzahnten Klemmzone auf die Unterseite des Tragschienenschenkels. Zwar ist hier die Kontaktkraft unabhängig vom Leiterquerschnitt, doch erhält der Schutzleiteranschluß insgesamt einen äußerst komplizierten konstruktiven Aufbau. Die Wippe ist ein kompliziertes Stanzteil mit Ausprägungen der Lagernoppen und auch der Klemmkörper als solcher wird entsprechend verkompliziert. In der Kontaktierungszone zwischen dem einen Wippenarm und dem Tragschienenschenkel kommt es beim Anklemmen auch nur zu einer im wesentlichen senkrecht auf den Tragschienenschenkel gerichteten Klemmkraft, was trotz der Verzahnung der Klemmzone nur zu einem unzureichenden Durchdringen von Korrosionsschutzschichten führt, so daß die Kontaktierung hier relativ schlecht ist.

Der vorliegenden Erfindung liegt von daher die Aufgabe zugrunde, einen Schutzleiteranschluß der gattungsgemäßen Art zu schaffen, der bei nach außen zum Tragschienenschenkel versetzter Lage der Klemmschraube ein sehr sicheres Kontaktieren mittels einer vom Leiterquerschnitt unabhängigen Kontaktkraft bei denkbar einfachem konstruktiven Aufbau des Leiteranschlusses ermöglicht.

Die erfindungsgemäße Lösung besteht darin, daß in dem Klemmkörper ein Gleitstück angeordnet ist, das eine unter der Klemmschraube liegende Klemmfläche aufweist, eine die Tragschienenschenkeloberseite beaufschlagende verzahnte Klemmzone hat und mit Führungsschrägen versehen ist, mit denen es an Führungsstücken des Klemmkörpers im Sinne einer beim Anziehen der Klemmschraube erfolgenden schräg nach außen und unten gerichteten Klemmbewegung mit einer horizontalen und vertikalen Bewegungskomponente geführt ist.

Bei der erfindungsgemäßen Ausgestaltung ist die Kontaktkraft, mit der die verzahnte Klemmzone auf die Oberseite des Tragschienenschenkels wirkt, unabhängig vom Querschnitt des anzuschließenden Leiters. Sie bestimmt sich ausschließlich nach der Anzugskraft der Klemmschraube, die die schräg nach unten außen gerichtete Klemmbewegung des Gleitstückes bewirkt. Die schräg nach unten außen gerichtete Klemmbewegung des Gleitstückes hat sowohl eine vertikale wie eine horizontale Bewegungskomponente. Die vertikale Komponente bewirkt das Verklemmen des Gleitstückes mit dem Tragschienenschenkel. Die horizontale Komponente bewirkt, daß in der Klemmphase die Verzahnung in der Klemmzone des Gleitstückes auch ein wenig über die Oberfläche des Tragschienenschenkels hinwegrutscht, so daß die Verzahnung etwaige Korrosionsschutzschichten dabei aufkratzt und es von daher zu einer besonders guten elektrischen Kontaktierung kommt. Ein derartiger Schutzleiteranschluß hat auch einen einfachen konstruktiven Aufbau. Kleine Führungsstücke am Klemmkörper lassen sich an einem derartigen Stanz- und Biegeteil problemlos verwirklichen, so daß der Klemmkörper als solcher seinen einfachen Aufbau behält. Das Gleitstück selbst ist ein einfach herzustellendes Stanzteil, so daß einfache Führungsschrägen problemlos herzustellen sind.

Weitere bevorzugte Ausgestaltungen eines derartigen Schutzleiteranschlusses sind in den Unteransprüchen gekennzeichnet. Sie betreffen bauliche Detailgestaltungen des Klemmkörpers und des Gleitstückes, die zum einfachen konstruktiven Aufbau des Schutzleiteranschlusses beitragen.

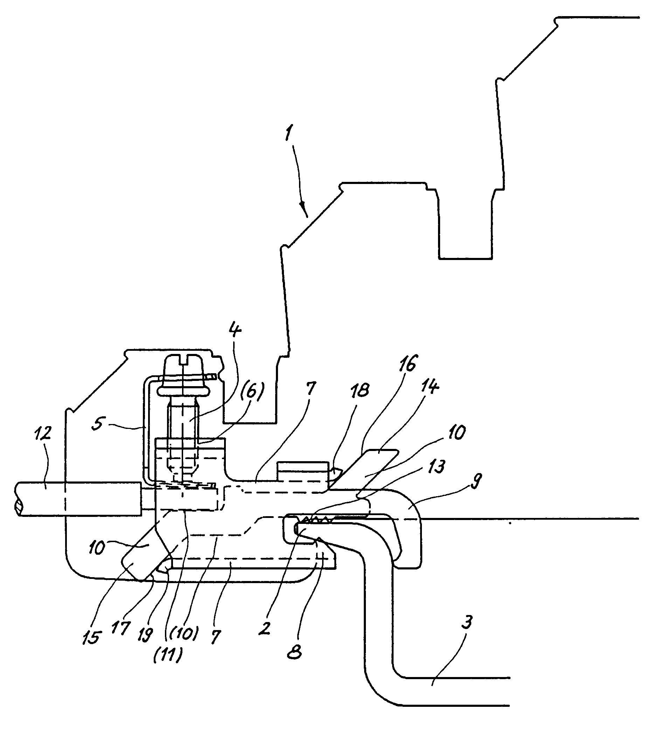

Ein Ausführungsbeispiel eines Schutzleiteranschlusses gemäß der Erfindung wird nachstehend unter Bezugnahme auf die beigefügte Zeichnung dargestellt.

Die Zeichnung zeigt einen derartigen Schutzleiteranschluß in Seitenansicht, mit Andeutung des angrenzenden Isolierstoffgehäuses einer mehretagigen elektrischen Klemme.

In dem unteren Außenbereich eines angedeuteten Isolierstoffgehäuses 1 einer elektrischen Klemme, der bei mehretagigen Klemmen den Schenkel 2 einer Tragschiene 3, auf der die Klemme aufgerastet wird, überragt, ist ein Schutzleiteranschluß zum Anschließen an die Tragschiene 3 angeordnet, der eine Klemmschraube 4 hat, die, damit sie bei der Tätigung des Anschlusses bei dem gegebenen Grundaufbau der mehretagigen Klemme zugänglich bleibt, ebenfalls nach außen versetzt zu dem Schenkel 2 der Tragschiene 3 liegt.
Die Klemmschraube 4, der ein Leiterschutzbügel 5 zugeordnet ist, ist in eine Gewindebohrung 6 eines Klemmkörpers 7 eingeschraubt. Der Klemmkörper 7 erstreckt sich bis zu der Tragschiene 3. Er ist in der üblichen Weise als Hohlteil ausgebildet, das durch Stanzen und Biegen hergestellt wird. Der Klemmkörper hat dabei einen ersten, die Unterseite des Tragschienenschenkels 2 untergreifenden Bügel 8 sowie einen weiteren den Tragschienenschenkel 2 im Innenraum der Tragschiene 3 hintergreifenden Bügel 9. Die Bügel 8 und 9 definieren ein Maul, dessen Öffnungsweite darauf ausgelegt ist, den Schutzleiteranschluß und damit die zugeordnete elektrische Klemme auf die Tragschiene 3 aufsetzen zu können. Im dargestellten Ausführungsbeispiel wird von einer sogenannten Hutschiene als Tragschiene ausgegangen. Bei anderen ebenfalls genormten Tragschienen mit etwas anderer Formgestaltung auch im Schenkelbereich hätten die Bügel bei grundsätzlich gleichem Bauprinzip dann eine andere Maulöffnung.

An dieser Stelle ist auch hervorzuheben, daß im dargestellten Ausführungsbeispiel davon ausgegangen worden ist, daß auf der anderen Seite der Tragschiene, also auf deren anderem, hier nicht dargestellten Schenkel die zugeordnete elektrische Klemme mit Bereichen ihres Isolierstoffgehäuses 1 festgesetzt wird. Bei Klemmenausführungen, bei denen das nicht der Fall ist, ist es möglich, den oberen Bügel 9 praktisch über die ganze Tragschienenbreite hinweg zu verlängern, dergestalt, daß er dann den anderen, hier nicht dargestellten Schenkel der Tragschiene 3, dann aber von außen her, übergreift.

In dem Klemmkörper 7 des Schutzleiteranschlusses ist nun ein Gleitstück 10 angeordnet, das sich sowohl einerseits bis in den Bereich der Klemmschraube 4 und andererseits bis in den Bereich des Schenkels 2 der Tragschiene 3 erstreckt. Das Gleitstück 10 hat eine Klemmfläche 11, auf die der anzuschließende Leiter 12 gelegt werden kann. Die Klemmfläche 11 befindet sich unterhalb der Klemmschraube 4, mit der beim Anziehen der Leiter 12 auf die Klemmfläche 11 gedrückt wird. Das Gleitstück 10 hat ferner eine auf die Oberseite des Tragschienenschenkels 2 einwirkende spitzverzahnte Klemmzone 13. Ferner hat das Gleitstück 10 an seinem innen liegenden Ende eine nach oben weisende Abwinkelung 14 sowie an seinem nach außen weisenden Ende eine nach unten gerichtete Abwinkelung 15. Die innen liegende nach oben weisende Abwinkelung 14 definiert mit ihrer Oberseite eine Führungsschräge 16, während die außen liegende nach unten gerichtete Abwinkelung auf ihrer Innenseite eine zur Führungsschräge 16 in einer Parallelebene liegende Führungsschräge 17 definiert. Für die Führungsschrägen 16 und 17 sind an dem Klemmkörper 7 Führungsstücke gebildet, im dargestellten Ausführungsbeispiel eine oberseitige umgebogene gerundete Lasche 18 für die Führungsschräge 16 sowie ein bodenseitiges abgebogenes gerundetes Endstück 19 für die Führungsschräge 17.

Legt man bei auf die Tragschiene 3 aufgesetzter elektrischer Klemme mit Aufsetzung des Schutzleiteranschlusses auf den Tragschienenschenkel 2 einen elektrischen Leiter 12 auf die Klemmfläche 11 des Gleitstückes 10 und zieht man die Klemmschraube 4 an, kommt es alsbald über die Führungsschrägen 16 und 17 des Gleitstückes 10 im Zusammenwirken mit den entsprechenden Führungsstücken 18 und 19 am Klemmkörper 7 zu einer schräg nach unten außen gerichteten Klemmbewegung des Gleitstückes 10, mit der in einer vertikalen Komponente die Klemmzone 13 des Gleitstückes 10 auf die Oberseite des Schenkels 2 der Tragschiene 3 gepreßt wird. Die Bügel 8 und 9 bilden dabei Widerlager. Die Maulöffnungsweite der Bügel 8 und 9 ist, auch schon im Sinne eines sicheren Aufsetzens auf die Tragschiene, so bemessen, daß dem Gleitstück 10 in jedem Fall die Möglichkeit auch für die Horizontalkomponente der schrägen Klemmbewegung gegeben ist, welche Horizontalkomponente bewirkt, daß die Spitzverzahnung der Klemmzone 13 über die Oberfläche des Schenkels 2 rutscht und dabei hier befindliche Korroionsschutzschichten im Sinne einer sicheren Kontaktierung aufreißt.

## Patentansprüche

1. Schutzleiteranschluß zum Anschließen an mindestens einen etwa horizontal nach außen abstehenden Schenkel (2) aufweisende Tragschienen (3), für insbesondere mehretagige elektrische Klemmen (1), mit einer Klemmschraube (4) und einem Klemmkörper (7), der einen den Tragschienenschenkel (2) untergreifenden (8) sowie einen den Tragschienenschenkel (2) hintergreifenden Bügel (9) aufweist, **dadurch gekennzeichnet,** daß in dem Klemmkörper (7) ein Gleitstück (10) angeordnet ist, das eine unter der Klemmschraube (4) liegende Klemmfläche (11) aufweist, eine die Oberseite des Tragschienenschenkels (2) beaufschlagende verzahnte Klemmzone (13) hat und mit Führungsschrägen (16, 17) versehen ist, mit denen es an Führungsstücken (18, 19) des Klemmkörpers (7) im Sinne einer beim Anziehen der Klemmschraube (4) erfolgenden schräg nach unten und außen gerichteten Klemmbewegung mit einer horizontalen und vertikalen Bewegungskomponente geführt ist.

2. Schutzleiteranschluß nach Anspruch 1, dadurch gekennzeichnet, daß das Gleitstück (10) eine innere nach oben gerichtete Abwinkelung (14) sowie eine äußere nach unten gerichtete Abwinkelung (15) aufweist, an denen jeweils die beiden in parallelen Ebenen liegenden Führungsschrägen (16 bzw. 17) gebildet sind.

3. Schutzleiteranschluß nach Anspruch 1 oder 2, dadurch gekennzeichnet, daß an dem Klemmkörper (7) ein innen liegendes oberseitiges Führungsstück in Form einer umgebogenen gerundeten Lasche (18) gebildet ist.

4. Schutzleiteranschluß nach einem der Ansprüche 1 bis 3, dadurch gekennzeichnet, daß an dem Klemmkörper (7) ein äußeres unterseitiges Führungsstück in Form eines abgebogenen gerundeten Bodenendstückes (19) gebildet ist.

## Claims

1. Safety earth terminal for connection to a mounting rail (3) provided with at least one leg (2) protruding approximately horizontally outwards, for, in particular, multi-layered electrical terminals (1), with a clamping screw (4) and a clamping body (7) which is provided with a clip (8) which grips underneath the mounting rail leg (2) and a clip (9) which grips behind the mounting rail leg (2), characterised in that in the clamping body (7), a sliding piece (10) is arranged which is provided with a clamping surface (11) lying under the clamping screw (4), has a toothed clamping zone (13) which contacts the top of the mounting rail leg (2), and is provided with inclined guides (16, 17) with which it is guided on guide pieces (18, 19) of the clamping body (7) in the sense of a clamping movement when the clamping screw (4) is tightened, which clamping movement is obliquely downwards and outwards with a horizontal and vertical movement component.

2. Safety earth terminal according to claim 1, characterised in that the sliding piece (10) is provided with an inner upward bend as well as an outer downward bend (15), on each of which the two inclined guides (16, 17 respectively) lying along parallel planes are formed.

3. Safety earth terminal according to claim 1 or 2, characterised in that on the clamping body (7) there is formed an internal top guide piece in the form of a bent, rounded loop (18).

4. Safety earth terminal according to one of claims 1 to 3, characterised in that on the clamping body (7) there is formed an external bottom guide piece in the form of a bent, rounded bottom end piece (19).

## Revendications

1. Raccordement de conducteur de protection, prévu pour le raccordement à au moins un rail de support (3) présentant une branche (2) s'étendant sensiblement horizontalement et faisant saillie vers l'extérieur, pour des bornes électriques (1) en particulier à plusieurs étages, avec une vis de serrage (4) et un corps de serrage (7) présentant un étrier (8), saisissant par le dessous l'une des branches (2) du rail support et présentant un étrier (9), saisissant par l'arrière la branche de rail de support (2), caractérisé en ce qu'une pièce de coulissement (10) est disposée dans le corps de serrage (7) et présente une surface de serrage (11) située sous la vis de serrage (4), ainsi qu'une zone de serrage (13) dentée agissant sur la face supérieure de la branche de rail de support (2) et est pourvue de rampes inclinées de guidage (16, 17), à l'aide desquels elle est guidée sur des pièces de guidage (18, 19) du corps de serrage (7), obliquement vers le bas et vers l'extérieur, avec une composante de déplacement horizontale et verticale, dans le sens d'un déplacement de serrage s'effectuant lors du serrage de la vis de serrage (4).

2. Raccordement de conducteur de protection selon la revendication 1, caractérisé en ce que la pièce de coulissement (10) présente un repli intérieur (14) orienté vers le haut, ainsi qu'un repli extérieur (15) orienté vers le bas, replis sur lesquels sont formées les deux rampes inclinées de guidage (respectivement 16, 17) placées dans des plans parallèles.

3. Raccordement de conducteur de protection selon la revendication 1 ou 2, caractérisé en ce qu'une pièce de guidage, supérieure et placée intérieurement, se présentant sous la forme d'une patte (18) arrondie et repliée, est formée sur le corps de serrage (7).

4. Raccordement de conducteur de protection selon l'une des revendications 1 à 3, caractérisé en ce qu'une pièce de guidage, inférieure et placée extérieurement, se présentant sous la forme d'une pièce d'extrémité de fond (19) arrondie et repliée, est formée sur le corps de serrage (7).
